# EUROPÄISCHE PATENTSCHRIFT

(11) **EP 3 178 628 B1**
(45) Veröffentlichungstag und Bekanntmachung des Hinweises auf die Patenterteilung: **31.10.2018**
(21) Anmeldenummer: 16199278.9
(22) Anmeldetag: 17.11.2016
(51) Int. Cl.: B29C 47/10, B29C 47/36, C08J 11/10

(54) **VERFAHREN UND VORRICHTUNG ZUR HERSTELLUNG EINER MODIFIZIERTEN KAUTSCHUKMISCHUNG**
METHOD AND DEVICE FOR MANUFACTURING A MODIFIED RUBBER MIXTURE
PROCÉDÉ ET DISPOSITIF DESTINÉS A LA FABRICATION D'UN MÉLANGE DE CAOUTCHOUC MODIFIÉ

(30) Priorität: 11.12.2015 DE 102015224957
(43) Veröffentlichungstag der Anmeldung: 14.06.2017
(73) Patentinhaber: Continental Reifen Deutschland GmbH, 30165 Hannover (DE)
(72) Erfinder: Naik, Shreyas, 30173 Hannover (DE); Schramm, Oliver, 31177 Harsum (DE); Müller, Matthias-Stephan, 30827 Garbsen (DE); Hallmann, Steffen, 30171 Hannover (DE); Minx, Carsten, 31535 Neustadt (DE)
(74) Vertreter: Finger, Karsten

(56) Entgegenhaltungen:
- EP-A2- 0 445 847
- US-A1- 2005 006 813
- US-B2- 7 189 762

## Beschreibung

Die Erfindung betrifft ein Verfahren zur Herstellung einer modifizierten Kautschukmischung und eine Vorrichtung zur Durchführung des Verfahrens. Die Erfindung bezieht sich dabei auf das Arbeitsgebiet der Wiederaufbereitung vulkanisierter Elastomerprodukte bzw. Kautschukpolymerprodukte (Gummi), insbesondere aus Altreifen.
Im Sinne einer restlosen Wiederverwertung wäre es erstrebenswert, die von Fremdmaterialien zuvor befreiten Elastomerstoffe vollständig devulkanisieren zu können. Unter einer Vulkanisation soll hier jede in einer gesonderten Stufe erfolgende Vernetzung eines zuvor nicht oder wenig vernetzten makromolekularen Stoffes verstanden werden, beispielsweise eines Kautschukpolymeren. Die Vulkanisation erfolgt mit Vernetzungschemikalien, wie Schwefel, Schwefelverbindungen oder Peroxiden. Bei einer Devulkanisierung wird angestrebt, nur diese Vulkanisationsvernetzung aufzubrechen. Die dadurch zurückgewonnenen Basispolymer- bzw. Kautschukmischungen könnten, ergänzt mit frischen Ausgangsstoffen, zur Produktion neuer Elastomere wieder eingesetzt werden.
Versuche zum Wiederaufbereiten von Gummi nach dem vorgenannten Recycling-Konzept sind als solche bekannt und werden seit langem intensiv untersucht und weiterentwickelt. Ein sehr wesentlicher Teil des wiederaufzuarbeitenden Altgummis stammt aus Altreifen. Eine der Hauptherausforderungen für das Gummirecycling besteht darin, dass das wiederaufbereitete Material vergleichsweise unzulängliche Eigenschaften im Vergleich zu frischem vulkanisierbarem Material besitzt. Dies beruht auf Strukturveränderungen, die durch die Recyclingverfahren verursacht werden.

Ein solches Verfahren, bei dem ein feinteiliges, beispielsweise geschreddertes oder abgeschliffenes Gummimaterial durch eine mechanische Beanspruchung in Form von Elongation und Scherkräften im Beisein eines überkritischen Fluids, das unter Normalbedingungen gasförmig ist, vorzugsweise von CO₂, kontrolliert devulkanisiert werden soll, ist aus der WO 2003/029298 A2 bekannt, in der von einer "Modifizierung von vernetztem Gummi" die Rede ist. Auch dieses Verfahren bietet kein vollwertiges Regenerat.

Ein anderer, praktikablerer Ansatz zur Wiederverwendung von Altgummi besteht bislang darin, das Gummigranulat oder Gummipulver in neuen Kunststoff- oder Gummiprodukten als Zuschlag bzw. Füllstoff zu verwenden. In frische Kautschukmischungen für die Reifenherstellung kann ein solches Gummipulver oder -granulat mit einem Anteil von bis ca. 20 Massenprozent eingebracht werden. Den hohen Anforderungen an Reifengummi genügt dies häufig nicht. Der Altgummizuschlag vernetzt nicht mit dem frischen Kautschuk und lässt sich daher nicht optimal einbinden.

Die US 2005/0006813 A1 betrifft ein Dosiergerät zum Bereitstellen eines Materials an einer Knet- und Extrudiervorrichtung zum Kneten des Materials und zum kontinuierlichen Extrudieren des gekneteten Materials. Das Dosiergerät weist einen Zerkleinerer, einen Extruder und eine Zahnradpumpe auf.

Die EP 0 445 847 A2 betrifft ein Verfahren zur Herstellung eines aus einem thermoplastischen Polymer extrudierten Schaumkörpers. Hierzu wird das Polymer plastiziert und unter Zugabe eines Treibmittels in eine Mischvorrichtung zugegeben.

Die Aufgabe der Erfindung besteht darin, die Einbindung von Gummipulver oder Gummigranulat in Kautschukmischungen für die Herstellung neuer Gummiprodukte zu verbessern. Eine weitere Aufgabe besteht darin dies auf verfahrenstechnisch gut handhabbare und energetisch günstige Weise zu bewerkstelligen. Ein zusätzliches Ziel ist die Bearbeitung in einem Schritt, insbesondere einem in der Gummiverarbeitung ohnehin erforderlichen Schritt, ohne gesonderte Vorbehandlung des Gummis.

Die Aufgabe wird mit Hilfe des Verfahrens nach Anspruch 1, der Vorrichtung nach Anspruch 9 und der so erhaltenen neuen Kautschukmischung nach Anspruch 15 gelöst. Vorteilhafte Weiterbildungen des Verfahrens und der Vorrichtung sind in den zugehörigen Unteransprüchen gekennzeichnet.

Erfindungsgemäß wird bei dem Verfahren eine Eingangs-Kautschukmischung aus einem Masterbatch mit Gummianteil in einer geschlossenen, druck- und gasdichten Einheit bei einem Druck von wenigstens 63 bar und einer Temperatur von wenigstens 31 °C mit überkritischem CO₂ versetzt und nachfolgend bei aufrecht erhaltenem oder erhöhtem Druck und unter Eintrag mechanischer Energie extrudiert. Das Verfahren ergibt unmittelbar und in einem einheitlichen Verfahren eine modifizierte Kautschukmischung, in der ein teilweise regeneriertes und optimal in die Kautschukmischung eingebundenes (Alt-)Gummi enthalten ist.

Das Ausgangsmaterial des Verfahrens ist ein Masterbatch mit Gummianteil. Es ist bekannt, alle Bestandteile einer für ein Produkt gewünschten Kautschukmischung, also Polymere, Füllstoffe, Öle und Additive als Masterbatch bereitzustellen. Hierfür werden auch kommerziell erhältliche Vormischungen herangezogen, in denen beispielsweise feinteilige Trockenkautschuke mit anderen Mischungsbestandteilen imprägniert vorliegen. Ein solches Masterbatch kann Gummi enthalten, wobei die Gummiteilchen in die imprägnierten Bestandteile integriert sein können. Derartige Masterbatches werden im Stand der Technik bereits verwendet.

Bei dem Gummi handelt es sich um ein zerkleinertes vulkanisiertes Gummimaterial, beispielsweise Altgummi aus Reifen oder anderen technischen Kautschukprodukten, insbesondere aus der Altreifenaufbereitung in Form von Reifengummigranulat, Reifengummimehl, d.h. -pulver oder sogenanntem "tire buffer", Abschliff aus der Reifenrunderneuerung. Alternativ kann jedes andere Altgummi eingesetzt werden, das vor der Anwendung in einem Masterbatch für diese Erfindung soweit zur Verfeinerung der Ausgangsteilchen erforderlich in geeigneter Weise zerkleinert wird.

Unter Gummi wird hier jedes Produkt aus vulkanisiertem, d.h. beispielsweise mit Schwefel oder Peroxid vernetztem Natur- oder Synthesekautschuk verstanden. Hierzu zählen beispielsweise Natur-Kautschuke oder Nitril-Kautschuke, Olefin-Kautschuke, Halogen-Kautschuke, Silikon-Kautschuke, Schwefel-Kautschuke, Styrol-Kautschuke und andere mehr, wie dem Fachmann bekannt. Die vulkanisierten Gummimaterialien, die mit der Erfindung recycelt werden können, umfassen auch thermoplastische Elastomere und thermoplastische Vulkanisate. Synonym zu Gummi kann auch von Vulkanisat gesprochen werden. Allgemein ist ein partikuläres Vulkanisat bzw. Gummi als Zuschlag in dem Ausgangs-Masterbatch für diese Erfindung vorhanden.

Das Masterbatch mit Gummianteil wird erfindungsgemäß - unmittelbar oder weiter aufbereitet - in Form einer Eingangs-Kautschukmischung einer geschlossenen, druck- und gasdichten Einheit zugeführt, in der die Eingangs-Kautschukmischung bei einem Druck von wenigstens 63 bar und einer Temperatur von wenigstens 31 °C behandelt wird, d.h. unter Bedingungen, bei denen zugeführtes Kohlendioxid (CO₂) in jedem Fall in einem superkritischen Zustand vorliegt.

Bei der o.g. weiteren Aufbereitung des Masterbatches kann es sich um eine der CO₂-Zuführung vorgeschaltete Trockenmischung, eine Erwärmung oder eine Vorplastifizierung handeln. So kann es gewünscht sein, dass ein gummihaltiges Basis-Masterbatch für die Herstellung verschiedenster Kautschukmischungsrezepturen mit weiteren Mischungsbestandteilen (Kautschuken, Weichmachern, Füllstoffen, Additiven) auf einem vorgeschalteten Mischextruder zu einer individuell abgewandelten Eingangs-Kautschukmischung aufbereitet wird. Bei einer derartigen Vorbereitung der Eingangs-Kautschukmischung kann die Masse zugleich erwärmt und/oder plastifiziert werden, um die nachfolgende Einarbeitung des überkritischen CO₂ zu erleichtern bzw. zu verbessern.

Die Temperatur beträgt am Eingang der CO₂-Zuführeinheit vorzugsweise nicht mehr als 160 °C, weiter vorzugsweise nicht mehr als 120 °C.

Im einfachsten Falle stellt das vorbereitete gummihaltige Masterbatch die Eingangs-Kautschukmischung für das erfindungsgemäße Verfahren dar.

Die Eingangs-Kautschukmischung ist vorzugsweise eine Grundmischung, d.h. eine solche Kautschukmischung, die noch keine Vernetzer und ggf. zugehörige Hilfsstoffe, die mit den Vernetzern zugegeben werden, enthält. Da jedoch die erfindungsgemäße Bearbeitung der Mischung mit CO₂ bereits bei vergleichsweise niederigen Temperaturen oberhalb 31 °C durchgeführt werden kann, ist - unter entsprechender Temperaturkontrolle während der Verfahrensdurchführung - auch der Einsatz von Fertigmischungen möglich.

Erfindungsgemäß wird die Eingangs-Kautschukmischung in einer dafür besonders vorgesehenen, nach außen abgeschlossenen, druck- und gasdichten Einheit mit CO₂ versetzt. Die Einheit kann als eine CO₂-Zuführeinheit bzw. eine CO₂-Imprägnierungseinheit oder -Behandlungseinheit betrachtet werden. Die Einführung des CO₂ in die Kautschuk-Mischung geschieht unter Bedingungen, die den überkritischen Zustand des CO₂ sicherstellen. Die Zugabe des überkritischem CO₂, das als Fluid ein ausgezeichnetes Quell- und Lösemittel ist, bewirkt an diesem Punkt, dass das CO₂ in die Eingangs-Kautschukmischung eindiffundiert, die daraufhin erweicht und aufquillt, wobei die löslichen Bestandteile angelöst werden. Durch die hohe Dispersivität des CO₂-Fluids wird es sehr gut in die Polymer-Füllstoff-Struktur integriert. Das CO₂ bereitet so die weitere mechanische Behandlung mittels der nachfolgenden Extrusion vor.

Das Verfahren wird vorteilhaft so geführt, dass bezogen auf die Masse der Eingangs-Kautschukmischung bis zu 10 m.-%, vorzugsweise bis zu 5 m.-% CO₂ zugegeben werden. Weiter vorzugsweise werden wenigstens 1 m.-%, bevorzugt wenigstens 2 m.-% CO₂ eingesetzt.

Die CO₂-haltige Kautschukmischung tritt nun in den angeschlossenen Extruder ein und wird bei aufrecht erhaltenem oder erhöhtem Druck, gegebenenfalls auch bei sich während dieser Extrusion erhöhendem Druck, unter Eintrag mechanischer Energie extrudiert. Durch die Anwesenheit des CO₂ werden zugleich die Fließeigenschaften der Kautschukmischung im Extruder verbessert. Neben anderen Effekten schont dies auch den Extrudermotor und verringert den erforderlichen Energieeintrag durch den Extruderantrieb. Am Ende der Extrusion kann das CO₂ sehr einfach wieder entfernt werden, beispielsweise durch Entspannen am Extruderausgang, wenn die Kautschukmischung den Extruder verlässt. Das auf diese Weise gasförmig anfallende CO₂ kann zurückgewonnen, gesammelt, unter Druck gebracht und wiederverwendet werden. Das CO₂ wird am Ende des Verfahrens aus der Kautschukmischung vollständig entfernt. Es ist nicht toxisch, geruchlos, nicht entflammbar und chemisch in Bezug auf die im Extruder ablaufenden Vorgänge völlig inert.

Dadurch, dass bei der Erfindung ausschließlich CO₂ zur Veränderung der physikalischen Eigenschaften der Masse eingesetzt wird, ist der Zusatz gesonderter Mastifikationshilfsmittel in der Regel überflüssig.

Die Temperatur in dem der CO₂-Imprägnierungseinheit nachgeschalteten Extruder sollte 160 bis 170 °C nicht überschreiten und vorzugsweise nirgends über 150 °C, weiter vorzugsweise nicht über 120 °C liegen.

Der innerhalb des Extruders oder beider Extruder aufgebaute Druck sollte vorzugsweise wenigstens 70 bar, weiter vorzugsweise wenigstens 74 bar betragen. Diese Drücke sind vorzugsweise ebenfalls für die Imprägnierungseinheit einzustellen.

Durch die Druck- und Temperaturwahl wird bei gleichzeitigem Einbringen von Scherkräften im Extruder sichergestellt, dass in die Kautschukmischung in erster Linie mechanische anstelle von nur thermischer Energie eingetragen wird. Hohe mechanische Scherkräfte provozieren bevorzugt Bindungsbrüche von CS-, S-S- und C-O-Bindungen, deren atomare Elastizitätskonstanten wesentlich kleiner sind als die der C-C-Bindung. Bei dem an der CO₂-imprägnierten Kautschukmischung stattfindenden Plastifizierungs- und Mastifizierungs-Prozess findet demnach bevorzugt eine Devulkanisierung oder zumindest eine Teil-Devulkanisierung statt.

Zugleich werden die Bestandteile der Kautschukmischung unter dem Einfluss des fluiden CO₂ sehr viel inniger gemischt als dies ohne CO₂ der Fall wäre. Gegebenenfalls nicht devulkanisierte oder nicht vollständig devulkanisierte Gummipartikel werden mit Hilfe des fluiden CO₂ sehr viel besser in die Kautschukmischung eingebunden als dies mit den Mitteln des Standes der Technik möglich war.

Es ist ein großer Vorteil der Erfindung, dass ein komplett vorgemischtes Masterbatch bzw. eine Eingangs-Kautschukmischung, wie beispielsweise aus einem Innenmischer kommend, in einem einheitlichen Extrusionsverfahren, wie oben näher dargestellt, gleichzeitig aufgeschlossen, teil-devulkanisiert und intensiv dispergiert werden kann. Die so erhaltene modifizierte Grundmischung ist sehr homogen vermischt, die zu dispergierenden Mischungsbestandteile sind optimal dispergiert, verbleibende Gummianteile sind sehr gut eingebunden und ein Teil des Gummis wurde durch Devulkanisationsprozesse in Form von mechanischen Bindungsbrüchen regeneriert.

Eine Teil-Devulkanisation wird vorzugsweise an der Oberfläche der Gummipartikel stattfinden, sodass diese - soweit sie nicht vollständig devulkanisiert werden - bei der nachfolgenden Neuvulkanisation ausgezeichnet mit den frischen Kautschukbestandteilen vernetzt werden.

Die Vorteile des erfindungsgemäßen Verfahrens können mit den verschiedensten Grundmischungen und verschiedenem Gummigehalt, je nach späterem Einsatzzweck des Produktes, verwirklicht werden. Derzeit wird es als besonders vorteilhaft angesehen, wenn die Eingangs-Kautschukmischung einen Gummianteil von bis zu 50 m.-% bezogen auf die Masse der Kautschukmischung, weiter vorzugsweise bis zu 20 m.-% und schließlich besonders bevorzugt von 2 bis 20 m.-% enthält.

Die Partikelgröße der Gummiteilchen sollte nicht zu groß sein. Der Einsatz großer Teilchen ist möglich, wenn dies für die geplante Produktverwendung günstig ist. Grundsätzlich können auch große Teilchen durch die Devulkanisierungsprozesse an der Teilchenoberfläche in frische Kautschukmischungen gut eingebunden werden. Es entsteht auch dann eine vergleichsweise sehr gute Anbindung der Gummiteilchen an die neue Elastomermatrix im frischen Vulkanisat.

Vorzugsweise ist jedoch bei dieser Erfindung vorgesehen, dass die Eingangs-Kautschukmischung Gummipartikel mit einer Teilchengröße kleiner oder gleich 0,8 mm Siebdurchgangsgröße beinhaltet, weiter vorzugsweise kleiner oder gleich 0,5 mm Siebdurchgangsgröße und ebenfalls bevorzugt größer oder gleich 0,2 mm Siebdurchgangsgröße.

Es ist besonders bevorzugt, wenn die Eingangs-Kautschukmischung der druck- und gasdichten Einheit, d.h. der CO₂-Imprägnierungseinheit, über einen vorgeschalteten mit dem Masterbatch mit Gummianteil beschickten Extruder zugeführt wird. Es kann sich dabei um einen in der Kautschukindustrie üblichen Einschnecken- oder Doppelschneckenextruder handeln; bevorzugt ist ein Doppelschneckenextruder.

Die auf das Versetzen der Mischung mit CO₂ folgende Extrusion muss unter erhöhtem Druck durchgeführt werden, damit sich das CO₂ in einem überkritischen Zustand bzw. einem Fluid-Zustand befindet. Diese Extrusion wird vorzugsweise mit einem Einzelschneckenextruder durchgeführt, der für die erforderlichen Drücke und das Einbringen ausreichender Scherkräfte ausgelegt ist. Hierfür stehen dem Fachmann kommerziell erhältliche Einzelschneckenextruder zur Verfügung, wie sie in der Kunststoffindustrie verwendet werden. Es handelt sich dabei um Einzelschneckenextruder mit relativ geringerem Durchmesser, die hohen Drücken, insbesondere oberhalb 65 bar standhalten.

Gemäß einer ersten sehr vorteilhaften Verfahrensalternative wird die Eingangs-Kautschuk-Mischung - ggf. über einen ersten Extruder oder in sonstiger geeigneter Weise - einer druck- und gasdichten Einheit, nämlich einer CO₂-Imprägnierungseinheit, zugeführt, die eine Verdrängerpumpe mit einer CO₂-Zuführung in das Gehäuse ist. Das CO₂ wird dabei über eine Druckleitung in das Gehäuse einer Verdrängerpumpe eingepresst, und zwar vorzugsweise in die Nähe der Pumpenförderelemente.

Die Vorteile der Injektion in eine Verdrängerpumpe bestehen darin, dass die Verdrängerpumpe rückschlagsfrei arbeitet und als gesondertes Gerät eine Barriere gegen stromaufwärts gelegene Anlagebestandteile bildet, sodass das CO₂-Fluid sehr unmittelbar und intensiv mit dem in der Verdrängerpumpe portioniert geförderten Stoffstrom vermischt wird. Die Verdrängerpumpe kann einen sehr hohen Druck aufbauen, wie er hier benötigt wird und vergrößert durch die Förderweise die für die CO₂-Imprägnierung zur Verfügung stehende Materialstromoberfläche, d.h. hier Kautschukmischungsoberfläche. Die Oberfläche der Fördermittel zerteilt den Materialstrom oder Massestrom in kleine Teilvolumina, die jeweils separat imprägniert werden können. Die Verdrängerpumpe ermöglicht daher eine sehr gute Zwangsführung des Massestroms und eine gleichmäßige Imprägnierung mit dem für das Verfahren erforderliche CO₂-Fluid.

Als Verdrängerpumpe für den Einsatz bei dem erfindungsgemäßen Verfahren sind insbesondere Zahnradpumpen, Zahnringpumpen, Rotorpumpen oder Schraubenpumpen geeignet. Die Verwendung von Zahnradpumpen ist derzeit bevorzugt.

In einer alternativen Verfahrensausführungsform wird die druck- und gasdichte Einheit durch einen für die Einleitung von CO₂ unter Druck eingerichteten Durchgangsbehälter bereitgestellt. In diesem Falle stellt der Durchgangsbehälter die CO₂-Imprägnierungseinheit dar. Dem Durchgangsbehälter ist eine Verdrängerpumpe vorgeschaltet, die wiederum die Zwangsführung des Stoffstroms verbessert, das Material durch den Durchgangsbehälter schiebt und den erforderlichen Druck bereitstellt. Bei dieser Verfahrensalternative wird das CO₂ vorzugsweise nur in den Druckbehälter eingepresst. Es kann jedoch vorgesehen sein, dass das CO₂ sowohl in eine dafür geeignete Verdrängerpumpe als auch in den Druckbehälter eingepresst wird. Der erforderliche CO₂-Strom wird auf diese Weise besser verteilt, was die Dispersionswirkung ggf. erhöhen kann.

Auch hier ist die vorgeschaltete Verdrängerpumpe bevorzugt eine Zahnradpumpe, eine Zahnringpumpe, eine Rotorpumpe oder eine Schraubenpumpe.

In bevorzugter Ausführungsform wird das erfindungsgemäße Verfahren so geführt, dass ein erster Extruder einer geschlossenen, druck- und gasdichten Einheit, in der die Imprägnierung mit CO₂-Fluid stattfindet, die Eingangs-Kautschukmischung zuführt und ein an die CO₂-Imprägnierungseinheit angeschlossener, nachfolgender Extruder - einem zweiten Extruder - die mechanische Scherarbeit an der gequollenen und verflüssigten, vom CO₂-Fluid durchdrungenen Masse ausführt. Die Erfindung stellt damit ein kontinuierliches Verfahren auf zwei über eine weitere Einheit verbundenen Extrudern dar, mit dem eine Kautschukmischung durch Fluidimprägnierung sowohl stärker dispergiert und vermischt als auch durch mechanische Scherarbeit innerhalb der Gummikomponente regeneriert, nämlich devulkanisiert oder teildevulkanisiert wird.

Die Erfindung umfasst weiterhin eine Vorrichtung zur Durchführung des Verfahrens, die gekennzeichnet ist durch einen ersten Extruder, einem mit dem ersten Extruder druck- und gasdicht verbundene, nachgeschaltene geschlossene Einheit, in die unter Druck über ein in das Innere der Einheit führendes Zuführelement ein Fluid einbringbar ist und einem der geschlossenen Einheit nachgeschalteten, mit dieser druck- und gasdicht verbundenen zweiten Extruder. Diese Vorrichtung ist eine besonders bevorzugte Ausführungsform der für das Verfahren möglichen Vorrichtungen. Sie besteht weitgehend aus in der Kautschuk- und Kunststoffindustrie verfügbaren apparativen Bestandteilen und ist für das Verfahren optimiert.

Der erste Extruder kann ein in der Kautschukindustrie bekannter und üblicher Einschnecken- oder Zweischneckenextruder sein. Der zweite Extruder ist vorzugsweise ein Einschneckenextruder mit niedriger Ganghöhe, der bei hohen Drücken ab 63 und vorzugsweise ab 65, 70 oder 75 bar betrieben werden kann. Beide Extruder sollten eine gute Temperierbarkeit und Wärmeableitung besitzen.

Die geschlossene Einheit innerhalb dieser Vorrichtung ist, wie oben bereits beschrieben, gemäß einer ersten Ausführungsform eine Verdrängerpumpe mit Fluidzuführung, wobei die Fluidzuführung besonders bevorzugt in die Nähe der Pumpenfördermittel führt, um das Fluid in die Förderkompartimente einbringen zu können. Geeignete Verdrängerpumpen wurden bereits genannt.

In einer alternativen Ausführungsform wird die druck- und gasdichte Einheit mit Hilfe eines Durchgangsbehälters verwirklicht, der mit einer Fluidzuführung ins Innere des Durchgangsbehälters ausgestattet ist. Dem Durchgangsbehälter wird vorzugsweise eine Verdrängerpumpe vorgeschaltet, die den im Durchgangsbehälter erforderlichen Druck gewährleistet und die vom Eingang bzw. dem ersten Extruder kommende Masse durch den Durchgangsbehälter in den zweiten Extruder fördert. Die Fluidzuführung in den Durchgangsbehälter kann beispielsweise eine Lanze sein. Vorzugsweise können auch mehrere Lanzen vorgesehen sein, über die das CO₂ fluidisiert ins Innere des Behälters und damit in die Kautschukmischung verteilt eingebracht wird.

Bevorzugt sind sowohl der erste als auch der zweite Extruder temperierbar und mit entlang des Verarbeitungsstroms verteilt angeordneten Heiz- und Kühlelementen ausgerüstet. Die modifizierte Kautschukmischung verlässt den zweiten Extruder wie üblich über eine Düse. Es kann dort eine Granuliereinheit angeschlossen sein, bevorzugt ist jedoch eine Flachdüse vorgesehen, aus der die Mischung als Fell austritt und in gewohnter Weise weiter verwendet werden kann.

In Weiterbildung der Erfindung ist es möglich, die beschriebene Vorrichtung nach dieser Erfindung in eine größere Anlage zu integrieren. Dabei ist es auch möglich, die aus dem zweiten Extruder austretende Kautschukmischung unmittelbar weiterzuverarbeiten. Im Falle einer mit geringer Temperatur behandelten Fertigmischung kann sich ein unmittelbares Ausformen zu einem Produkt anschließen.

Es ist ein besonderer Vorteil der Erfindung, dass die erfindungsgemäße Vorrichtung aus kommerziellen Geräten zusammengestellt werden kann, wie sie in der Gummiverarbeitung und der Kunststoffindustrie bekannt sind, und für das Verfahren nur angepasst werden müssen. Es lässt sich auf relativ einfache Weise eine Vorrichtung zur Durchführung des erfindungsgemäßen Verfahrens verwirklichen. Das Verfahren und die Vorrichtung tragen außerdem zur Energieoptimierung des Gesamtprozesses bei.

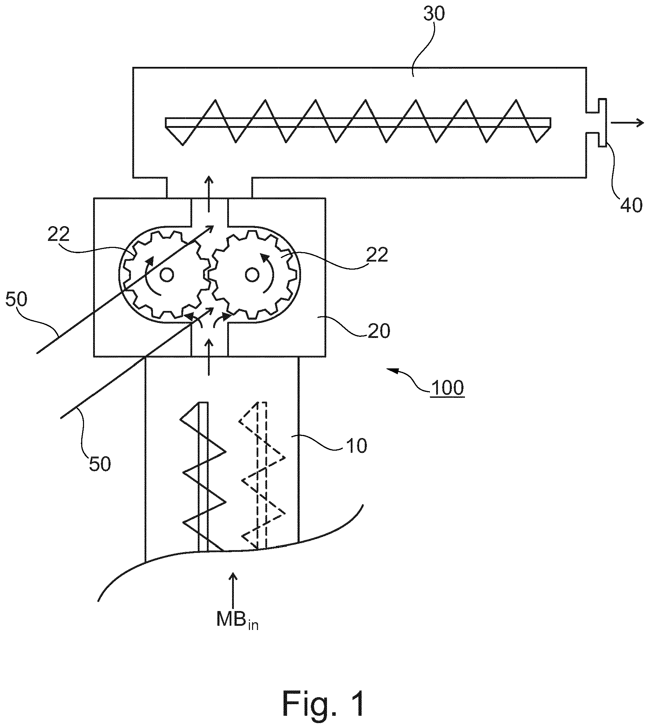

Die neue modifizierte Kautschukmischung ist gekennzeichnet durch einen Anteil an regeneriertem Kautschuk und einen Restanteil an Vulkanisat, der vorzugsweise kleiner als 20 m.-% ist. Das Restvulkanisat ist typischerweise an seiner Oberfläche verändert und mikroskopisch besser eingebunden, als dies bei einem Gummizuschlag in einer Kautschukmischung üblicherweise möglich ist.
Im Folgenden wird die Erfindung anhand von Ausführungsbeispielen näher dargestellt, die in der Zeichnung gezeigt sind. Dies dient allein der Illustration und dem besseren Verständnis der Erfindung. Andere Ausführungsbeispiele sind der vorstehenden Beschreibung entnehmbar.
In den Zeichnungen zeigen:
- Figur 1: - die schematische Schnittansicht einer Vorrichtung gemäß erster Alternative mit Einzel- oder Doppelschneckenextruder, fluidzuführender Zahnradpumpe und nachfolgendem Einzelschnecken-Plastifizierextruder;
- Figur 2: - die schematische Schnittdarstellung einer Vorrichtung gemäß zweiter Alternative mit einem Durchgangsbehälter als Imprägnierungseinheit.
Es wird Bezug genommen auf Figur 1. Die darin sehr schematisch dargestellte Vorrichtung **100** gemäß der ersten Ausführungsalternative besitzt einen ersten, vorgeschalteten Extruder **10**, der gas- und druckdicht über nicht gesondert dargestellte Flansche mit der hier die Imprägnierungseinheit bildenden geschlossenen, druck- und gasdichten Einheit **20** verbunden ist, die wiederum gas- und druckdicht mit dem nachfolgenden, bei aufrechterhaltenem oder erhöhtem Druck und unter Eintrag mechanischer Scherenergie arbeitenden zweiten (nachfolgendem) Extruder **30** verbunden ist. Der Massestrom der Kautschukmischung innerhalb der Vorrichtung **100** ist mit Pfeilen gekennzeichnet. Der Eintritt des Masterbatches, das die Eingangs-Kautschukmischung bildet, ist hier nicht gesondert dargestellt und erfolgt in üblicher Weise. Der Eintritt der zu bearbeitenden Kautschukmasse ist hier lediglich mit "MBᵢₙ" gekennzeichnet. Am Extruderausgang ist hier eine Düse **40** vorgesehen, über die die behandelte modifizierte Kautschukmischung die Vorrichtung **100** verlässt. Der erste oder vorgeschaltete Extruder **10** kann, wie dargestellt, ein Einzelschneckenextruder oder ein Doppelschneckenextruder sein. Die einzelne oder ggf. beide Schnecken befördern den Stoffstrom in die Imprägnierungseinheit **20,** die hier durch eine Zahnradpumpe in druckfestem, mit den Extrudern fest verbundenem Gehäuse gebildet wird. Um die Imprägnierung mit dem CO₂ zu erleichtern, wird die Kautschukmischung bzw. die Masse im ersten Extruder **10** leicht erwärmt, um die Masse, nämlich hier eine Grundmischung mit Gummianteil, leicht zu erweichen. Hierfür reichen Temperaturen von ca. 120 °C aus. Die Zuführung **50** für das CO₂-Fluid in die Einheit **20** ist hier ebenfalls nur angedeutet. Die Zuführelemente liegen senkrecht zur Zeichenebene, und die Zuführung erfolgt in den Eingangs- und Ausgangsbereich des Pumpenraums nahe zu den Förderelementen **22**, hier zwei gegengleich drehende Zahnräder einer Zahnradpumpe. Die Zuführung **50** des CO₂s unter Druck in den Pumpenraum ist hier daher nur mit Pfeilen angedeutet. Die so imprägnierte Kautschukmischung verlässt die Imprägnierungseinheit **20** und tritt in den zweiten, nachfolgenden Extruder **30** ein, wie durch einen Pfeil verdeutlicht. In diesem zweiten Extruder **30** findet die oben ausführlich beschriebene Behandlung der imprägnierten Mischung unter Eintrag mechanischer Energie in Form hoher Scherkräfte statt. Die Temperatur wird dabei kontrolliert, damit die thermische Energie, die durch die mechanische Belastung erzeugt wird, die vorzugsweise einzutragende mechanische Energie nicht übersteigt. Die plastifizierte und behandelte und auf diese Weise modifizierte Kautschukmischung verlässt den zweiten Extruder **30** durch die Düse **40** in Form eines Fells und wird dann wie üblich der Weiterverarbeitung zugeführt.

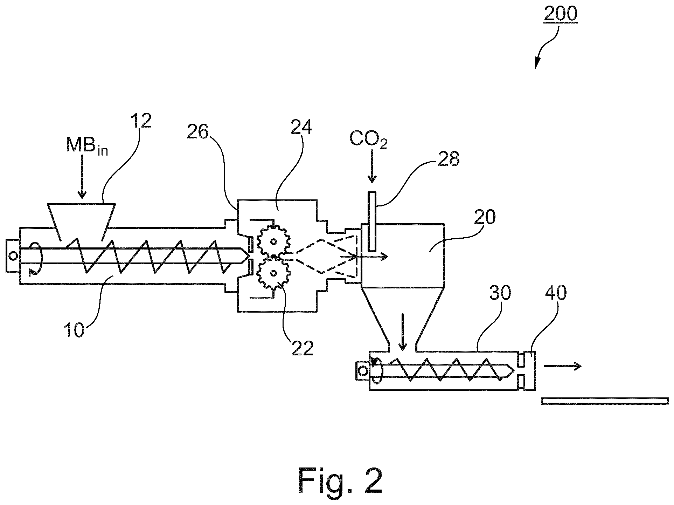

Es wird Bezug genommen auf Figur 2. Gleiche Bauteile sind mit gleichen Bezugszeichen gekennzeichnet. Die schematische Schnittdarstellung zeigt wiederum einen ersten, der Imprägnierungseinheit vorgeschalteten Extruder **10**, hier mit einem Einfülltrichter **12** für die Zuführung des Ausgangs-Masterbatches mit Gummianteil. Der für dieses Beispiel gewählte Einzelschneckenextruder **10** kann ein konventioneller in der Kautschukindustrie bekannter Extrudertyp sein. Dieser erste Extruder **10** ist mit einer der eigentlichen Imprägnierungseinheit **20** vorgeschalteten Verdrängerpumpe **24** in Form einer Zahnradpumpe verbunden. Der erste Extruder **10** ist mit seinem Ausgang am Gehäuse **26** der Pumpe angeflanscht. Die Pumpe **24** presst die Kautschukmischung in die hier als Durchgangsbehälter ausgebildete druck- und gasdichte Einheit **20**, in der die Imprägnierung mit dem CO₂-Fluid erfolgt. Von dort aus verlässt die Kautschukmischung die Einheit **20** in Pfeilrichtung und tritt in den zweiten, nachfolgenden Extruder **30** ein, in dem die Bearbeitung erfolgt, wie oben schon beschrieben. Die Mischung verlässt die Vorrichtung **200** wiederum durch eine Düse **40**, von der aus das gebildete Fell weitergeführt und der weiteren Verarbeitung zugeführt wird. Das CO₂ tritt in diesem Beispiel über eine nicht näher gezeigte Druckleitung und über eine Lanze **28** in den Innenraum der Einheit **20** ein. Die CO₂-Zuführung erfolgt hier bewusst nahe am Mischungseintritt. Die Verweilzeit der Mischung im Durchgangsbehälter wird durch dessen Größe und die Extrusionsgeschwindigkeit bestimmt und kann wie gewünscht eingestellt werden. Die erforderlichen Eckdaten kann der Fachmann durch Vorversuche bestimmen. Größe und Form dieses Behälters können auch in Abhängigkeit vom Gummianteil und dem gewünschten zu erzielenden Modifizierungseffekt angepasst werden. In der Einheit **20** erfolgt hier keine Durchmischung, sondern das Material, die Kautschukmischung, wird frei quellen gelassen bzw. ruhen gelassen und lediglich ohne weitere Agitation fortbewegt. Dies ist ausreichend, weil das überkritische CO₂, also das CO₂-Fluid, eine ausgezeichnete Diffusivität besitzt und sich ohne Weiteres mit der durch den ersten Extruder und die Verdrängerpumpe vorbereiteten Mischung vermischt und verbindet. Durch die zweite Verfahrensalternative wird die Quellzeit vor einer mechanischen Behandlung verlängert. Die Bedingungen, unter denen die Quellung und Diffusion erfolgt, sind hier gezielter einstellbar. Der Dispersionsaspekt ist betont gegenüber dem Devulkanisationsaspekt.

### Bezugszeichenliste

### (Teil der Beschreibung)

- 100: Vorrichtung (1. Alternative)
- 200: Vorrichtung (2. Alternative)
- 10: erster vorgeschalteter Extruder
- 12: Einfülltrichter
- 20: (CO₂-Imprägnierungs-)Einheit
- 22: Zahnräder/Pumpenförderelemente
- 24: Verdrängerpumpe, vorgeschaltet
- 26: Gehäuse der Pumpe
- 28: (CO₂-)Lanze
- 30: zweiter, nachfolgender Extruder
- 40: Düse

## Patentansprüche

1. Verfahren zur Herstellung einer modifizierten Kautschukmischung unter Verwendung eines Gummianteils aus zerkleinertem vulkanisiertem Gummimaterial, bei dem ein Ausgangsmaterial in einer druck- und gasdichten Einheit (20) bei einem Druck von wenigstens 63 bar und einer Temperatur von wenigstens 31 °C mit überkritischem CO₂ versetzt und nachfolgend bei aufrecht erhaltenem oder erhöhtem Druck und unter Eintrag mechanischer Energie extrudiert wird, **dadurch gekennzeichnet, dass** als Ausgangsmaterial eine Eingangs-Kautschukmischung aus einem Masterbatch mit den Bestandteilen einer Kautschukmischung und dem Gummianteil eingesetzt wird, um die modifizierte Kautschukmischung zu ergeben.

2. Verfahren nach Anspruch 1, **dadurch gekennzeichnet, dass** die Eingangskautschukmischung einen Gummianteil von bis zu 50 m.-%, vorzugsweise bis zu 20 m.-%, weiter vorzugsweise 2 bis 20 m.-% enthält.

3. Verfahren nach Anspruch 1 oder 2, **dadurch gekennzeichnet, dass** für den Gummianteil in dem Masterbatch und der daraus gebildeten Eingangs-Kautschukmischung Gummipartikel mit einer Teilchengröße kleiner oder gleich 0,8 mm Siebdurchgangsgröße vorliegen.

4. Verfahren nach einem der Ansprüche 1 bis 3, **dadurch gekennzeichnet, dass** die Eingangs-Kautschukmischung der druck- und gasdichten Einheit (20) über einen vorgeschalteten mit dem Masterbatch mit Gummianteil beschickten Extruder (10) zugeführt wird, vorzugsweise einen Doppelschneckenextruder.

5. Verfahren nach einem der Ansprüche 1 bis 4, **dadurch gekennzeichnet, dass** die auf das Versetzen der Mischung mit CO₂ folgende Extrusion in einem Einschneckenextruder durchgeführt wird.

6. Verfahren nach einem der Ansprüche 1 bis 5, **dadurch gekennzeichnet, dass** die druck- und gasdichte Einheit (20) eine Verdrängerpumpe mit einer CO₂-Zuführung (50) in das Gehäuse ist.

7. Verfahren nach einem der Ansprüche 1 bis 5, **dadurch gekennzeichnet, dass** die druck- und gasdichte Einheit (20) ein Durchgangsbehälter mit CO₂₋Zuführung (28) und vorgeschalteter Verdrängerpumpe (24) ist.

8. Verfahren nach Anspruch 6 oder 7, **dadurch gekennzeichnet, dass** die Verdrängerpumpe (20; 24) eine Zahnradpumpe, eine Zahnringpumpe, eine Rotorpumpe oder eine Schraubenpumpe ist.

9. Vorrichtung (100; 200) zur Durchführung des Verfahrens nach einem der Ansprüche 1 bis 8, mit
- einem ersten Extruder (10), **gekennzeichnet durch**
- eine mit dem ersten Extruder (10) druck- und gasdicht verbundene, nachgeschaltete Einheit (20), in die unter Druck über ein in das Innere der Einheit (20) führendes Zuführelement (28; 50) ein Fluid einbringbar ist,
- einen der druck- und gasdichten Einheit (20) nachgeschalteten, mit dieser druck- und gasdicht verbundenen zweiten Extruder (30).

10. Vorrichtung (100; 200) nach Anspruch 9, **dadurch gekennzeichnet, dass** die Einheit (20) eine Verdrängerpumpe mit Fluidzuführung (50) ist.

11. Vorrichtung (100; 200) nach Anspruch 9, **dadurch gekennzeichnet, dass** die Einheit (20) ein Durchgangsbehälter mit Fluidzuführung (28) und vorgeschalteter Verdrängerpumpe (24) ist.

12. Vorrichtung (100; 200) nach Anspruch 10 oder 11, **dadurch gekennzeichnet dass** die Verdrängerpumpe (24) eine Zahnradpumpe, eine Zahnringpumpe, eine Rotorpumpe oder eine Schraubenpumpe ist.

13. Vorrichtung (100; 200) nach einem der Ansprüche 9 bis 12, **dadurch gekennzeichnet, dass** der erste Extruder (10) ein Doppelschneckenextruder ist.

14. Vorrichtung (100; 200) nach einem der Ansprüche 9 bis 13, **dadurch gekennzeichnet, dass** der zweite Extruder (30) ein Einzelschneckenextruder ist.

## Claims

1. Method for producing a modified rubber mixture by using a fraction of comminuted vulcanized rubber material, in which a starting material is mixed with supercritical CO₂ in a pressure- and gas-tight unit (20) under a pressure of at least 63 bar and at a temperature of at least 31°C and is subsequently extruded while the pressure is maintained or increased and mechanical energy is introduced, **characterized in that** an input rubber mixture comprising a masterbatch with the constituents of a rubber mixture and the vulcanized rubber fraction is used as the starting material in order to obtain the modified rubber mixture.

2. Method according to Claim 1, **characterized in that** the input rubber mixture contains a vulcanized rubber fraction of up to 50% by mass, preferably up to 20% by mass, more preferably 2 to 20% by mass.

3. Method according to Claim 1 or 2, **characterized in that** rubber particles with a particle size less than or equal to a screening size of 0.8 mm are provided for the vulcanized rubber fraction in the masterbatch and the input rubber mixture formed therefrom.

4. Method according to one of Claims 1 to 3, **characterized in that** the input rubber mixture is fed to the pressure- and gas-tight unit (20) by means of an upstream extruder (10) that is charged with the masterbatch with the vulcanized rubber fraction, preferably a twin-screw extruder.

5. Method according to one of Claims 1 to 4, **characterized in that** the extrusion following the mixing of the mixture with CO₂ is carried out in a single-screw extruder.

6. Method according to one of Claims 1 to 5, **characterized in that** the pressure- and gas-tight unit (20) is a positive displacement pump with a CO₂ feed (50) into the housing.

7. Method according to one of Claims 1 to 5, **characterized in that** the pressure- and gas-tight unit (20) is a through-container with a CO₂ feed (28) and an upstream positive displacement pump (24).

8. Method according to Claim 6 or 7, **characterized in that** the positive displacement pump (20, 24) is a gear pump, an annular gear pump, a rotor pump or a screw pump.

9. Device (100; 200) for carrying out the method according to one of Claims 1 to 8, with
- a first extruder (10), **characterized by**
- a downstream unit (20), which is connected to the first extruder (10) in a pressure- and gas-tight manner and into which a fluid can be introduced under pressure by means of a feed element (28; 50) leading into the interior of the unit (20),
- a second extruder (30), which is arranged downstream of the pressure- and gas-tight unit (20) and is connected to it in a pressure- and gas-tight manner.

10. Device (100; 200) according to Claim 9, **characterized in that** the unit (20) is a positive displacement pump with a fluid feed (50).

11. Device (100; 200) according to Claim 9, **characterized in that** the unit (20) is a through-container with a fluid feed (28) and an upstream positive displacement pump (24).

12. Device (100; 200) according to Claim 10 or 11, **characterized in that** the positive displacement pump (24) is a gear pump, an annular gear pump, a rotor pump or a screw pump.

13. Device (100; 200) according to one of Claims 9 to 12, **characterized in that** the first extruder (10) is a twin-screw extruder.

14. Device (100; 200) according to one of Claims 9 to 13, **characterized in that** the second extruder (30) is a single-screw extruder.

## Revendications

1. Procédé de fabrication d'un mélange de caoutchouc modifié avec utilisation d'une part de gomme constituée de matière de gomme vulcanisée broyée, dans lequel on fait réagir une matière première dans une unité étanche à la pression et au gaz (20) sous une pression d'au moins 63 bar et une température d'au moins 31°C avec du CO₂ supercritique et on l'extrude ensuite sous une pression maintenue ou augmentée et avec apport d'énergie mécanique, **caractérisé en ce que** l'on utilise comme matière première un mélange de caoutchouc d'entrée composé d'un mélange mère avec des ingrédients d'un mélange de caoutchouc et la part de gomme afin de produire le mélange de caoutchouc modifié.

2. Procédé selon la revendication 1, **caractérisé en ce que** le mélange de caoutchouc d'entrée contient une matière de gomme de jusque 50 % en masse, de préférence encore de 2 à 20 % en masse.

3. Procédé selon la revendication 1 ou 2, **caractérisé en ce que** pour la part de gomme dans le mélange mère et dans le mélange de caoutchouc d'entrée formé à partir de celui-ci des particules de gomme sont présentes avec une taille de particules inférieure ou égale à 0,8 mm de taille de passage de tamis.

4. Procédé selon l'une quelconque des revendications 1 à 3, **caractérisé en ce que** le mélange de caoutchouc d'entrée est fourni à l'unité étanche à la pression et au gaz (20) par une extrudeuse (10) placée en amont et alimentée avec le mélange mère avec une part de gomme, de préférence une extrudeuse à double vis.

5. Procédé selon l'une quelconque des revendications 1 à 4, **caractérisé en ce que** l'on effectue l'extrusion qui suit la réaction du mélange avec du CO₂ dans une extrudeuse à une seule vis.

6. Procédé selon l'une quelconque des revendications 1 à 5, **caractérisé en ce que** l'unité étanche à la pression et au gaz (20) est une pompe à déplacement positif avec une arrivée de CO₂ (50) dans le boîtier.

7. Procédé selon l'une quelconque des revendications 1 à 5, **caractérisé en ce que** l'unité étanche à la pression et au gaz (20) est un réservoir de passage avec une arrivée de CO₂ (28) et une pompe à déplacement positif (24) placée en amont.

8. Procédé selon la revendication 6 ou 7, **caractérisé en ce que** la pompe à déplacement positif (20; 24) est une pompe à engrenages, une pompe annulaire à engrenages, une pompe à rotor ou une pompe à vis.

9. Dispositif (100; 200) pour la mise en oeuvre du procédé selon une des revendications 1 à 8, avec
- une première extrudeuse (10),
**caractérisé par**
- une unité (20) placée en aval et raccordée de façon étanche à la pression et au gaz à la première extrudeuse (10), dans laquelle un fluide peut être introduit sous pression par un élément d'alimentation (28; 50) menant à l'intérieur de l'unité (20),
- une deuxième extrudeuse (30) placée en aval de l'unité étanche à la pression et au gaz (20) et raccordée à celle-ci de façon étanche à la pression et au gaz.

10. Dispositif (100; 200) selon la revendication 9, **caractérisé en ce que** l'unité (20) est une pompe à déplacement positif avec une arrivée de fluide (50).

11. Dispositif (100; 200) selon la revendication 9, **caractérisé en ce que** l'unité (20) est un réservoir de passage avec une arrivée de fluide (28) et une pompe à déplacement positif (24) placée en amont.

12. Dispositif (100; 200) selon la revendication 10 ou 11, **caractérisé en ce que** la pompe à déplacement positif (24) est une pompe à engrenages, une pompe annulaire à engrenages, une pompe à rotor ou une pompe à vis.

13. Dispositif (100; 200) selon l'une quelconque des revendications 9 à 12, **caractérisé en ce que** la première extrudeuse (10) est une extrudeuse à double vis.

14. Dispositif (100; 200) selon l'une quelconque des revendications 9 à 13, **caractérisé en ce que** la deuxième extrudeuse (30) est une extrudeuse à une seule vis.
